# EUROPÄISCHE PATENTSCHRIFT

(11) **EP 3 965 940 B1**
(45) Veröffentlichungstag und Bekanntmachung des Hinweises auf die Patenterteilung: **16.08.2023**
(21) Anmeldenummer: 21720283.7
(22) Anmeldetag: 22.04.2021
(51) Int. Cl.: B02C 15/00, B02C 23/02, B02C 25/00

(54) **MAHLVERFAHREN UND -ANLAGE MIT MATERIALEINGANGSERKENNUNG**
GRINDING METHOD AND APPARATUS WITH MATERIAL ENTRY DETECTION
PROCÉDÉ ET INSTALLATION DE BROYAGE À DÉTECTION D'ENTRÉE DE MATIÈRE

(30) Priorität: 23.04.2020 EP 20170999
(43) Veröffentlichungstag der Anmeldung: 16.03.2022
(73) Patentinhaber: Gebr. Pfeiffer SE, 67655 Kaiserslautern (DE)
(72) Erfinder: DÜLFER, Mathias, 35094 Lahntal (DE); KUNER, Saskia, 67316 Carlsberg (DE); TANZMANN, Florian, 67661 Kaiserslautern (DE)
(74) Vertreter: Grünecker Patent- und Rechtsanwälte PartG mbB
(86) Internationale Anmeldenummer: PCT/EP2021/060545
(87) Internationale Veröffentlichungsnummer: WO 2021/214230

(56) Entgegenhaltungen:
- WO-A1-2020/049517
- JP-A- H07 116 531
- US-A- 5 386 945

## Beschreibung

Die vorliegende Erfindung betrifft ein Verfahren zum Mahlen von partikelförmigem Schüttgut und eine Anlage zum Mahlen von Aufgabematerial in Form von partikelförmigem Schüttgut.

Es ist im Stand der Technik bekannt, die Partikelgrößenverteilung von gemahlenem Material zu erfassen. So offenbart die JP 2016-200518 A eine Bilderfassungsvorrichtung zwischen einem Materialspeicher für das gemahlene Material und einer Mischvorrichtung, in der Wasser und Zement zugeführt wird. Gemäß der US 5,386,945 A wird die Partikelgrößenverteilung von gemahlenem Material zur Anpassung der Betriebsbedingungen über ein charakteristisches Modell herangezogen. Die JP H07-116531A offenbart ein Regelungsverfahren für eine Wälzmühle mit einem Mahlgutlagendickensensor.

Aus der WO 2018/148832 A1 ist es bekannt, dass digitale Bilderfassungssensoren zum Messen einer Größenverteilung von Steinen in einem Zuführungsstrom zu einer Mühle auf einem Förderband vorgesehen sind. Fallende Gesteinsbrocken werden vermessen, wobei Regelungsstrategien auf Basis der Messung der Parameter Größenverteilung und Härte des zugeführten Materials entwickelt werden.

Aus der US 2018/0369829 A1 ist ein Zerkleinerungsverfahren für Erz bekannt, wobei mit einem 3D-Bilderfassungssystem auf einem Förderband gefördertes Erz bilderfasst wird, bevor es einem Mahlkreislauf zugeführt wird. Insbesondere wird offenbart, dass ein Partikelgrößenverteilungsprofil bestimmt wird, aus dem Gesteinsgrößenvariablen berechnet werden können, darunter der Volumenstrom oder die Partikelanzahl von gewissen, vorbestimmten kleinsten oder größten Prozentanteilen von Partikeln. Insbesondere kann eine Partikelanzahl in einem Kieselgrößenbereich bestimmt werden, der dem zutreffenden Partikelgrößenbereich zur Verwendung als Mahlkörper in einer vorgegebenen Mühlenkonfiguration entspricht. Diese Werte können für die Steuerung der Mühle berücksichtigt werden, wobei u.a. die Mahlgeschwindigkeit, die Massenzufuhr, der Wassereintrag, der Kugeleintrag bei Kugelmühlen oder der Kieseleintrag gesteuert werden können. Die WO 2020/049517 A1 offenbart ein Verfahren zur Überwachung der Eigenschaften von Eisenerz mittels Machine-Learning zur Einstellung eines Erzzerkleinerers.

Die vorliegende Erfindung hat die Aufgabe, ein Verfahren und eine Anlage zum Mahlen von Aufgabematerial in Form von partikelförmigem Schüttgut bereitzustellen, mit einer verbesserten Verfügbarkeit und Prozessstabilität, insbesondere durch Reduktion der erzeugten Vibrationen. Die Verfügbarkeit wird definiert als die Zeit der Mühle, in der Fertiggut produziert werden kann. Die Mühle ist nicht verfügbar, wenn Betriebsstörungen vorliegen oder Wartungsmaßnahmen durchgeführt werden müssen.

Die Erfindung stellt ein Verfahren zum Mahlen von Aufgabematerial in Form von partikelförmigem Schüttgut bereit, wobei zunächst die Partikelgrößen des Aufgabematerials erfasst werden und dann das Aufgabematerial in einer Mühle in Abhängigkeit von wenigstens einer Stellgröße gemahlen wird. Erfindungsgemäß wird die wenigstens eine Stellgröße geändert, wenn der Anteil an kleinen Partikelgrößen in den erfassten Partikelgrößen ansteigt. Insbesondere kann die Stellgröße durch eine Steuerungseinheit automatisch geändert werden. Bei der Steuerungseinheit kann es sich um einen Computer bzw. Mikrochip mit einem entsprechend angepassten Programm handeln. Alternativ ist es aber auch möglich, einen Hinweis, beispielsweise ein Warnsignal, an eine Bedienperson auszugeben, und die Bedienperson ändert daraufhin die Stellgröße. Der Hinweis an die Bedienperson kann eine Empfehlung für die Änderung der Stellgröße enthalten. Es wurde erkannt, dass hohe Feinheitsanteile zu einer Steigerung der Mühlenvibration beitragen. Im bekannten Stand der Technik wird hingegen die Ansicht vertreten, dass insbesondere zu große Anteile von großen Partikelgrößen hinsichtlich Vibrationserzeugung relevant sind.

Insbesondere wird aus den erfassten Partikelgrößen der Anteil an kleinen Partikelgrößen berechnet. Dabei können die kleinen Partikelgrößen insbesondere als die Partikel definiert werden, die eine vorbestimmte Größe, insbesondere einen vorbestimmten Minimaldurchmesser oder ein vorbestimmtes Minimalvolumen unterschreiten. Der Anteil kann insbesondere ein Gewichtsanteil, ein Volumenanteil oder ein Partikelanzahlanteil sein.

Vorteilhafterweise wird eine Kenngröße berechnet, die indikativ für den Anteil an kleinen Partikelgrößen ist. Die Stellgröße wird insbesondere in Abhängigkeit dieser Kenngröße geändert.

In einer Ausführungsform wird die Kenngröße berechnet durch die Division der bestimmten Partikelanzahl durch die mit einer Aufgabematerialerfassungsvorrichtung maximal detektierbare Partikelanzahl. Die mit der Aufgabematerialerfassungsvorrichtung maximal detektierbare Partikelanzahl hängt insbesondere von der Auflösung der Aufgabematerialerfassungsvorrichtung, sowie von deren Anordnung bezüglich des Aufgabematerials ab. Die mit der Aufgabematerialerfassungsvorrichtung maximal detektierbare Partikelanzahl ist insbesondere ein fest vorgegebener Parameter der Anlage, mit der das Verfahren betrieben wird.

Die Kenngröße kann insbesondere in Abhängigkeit der Durchmesser für jedes erkannte Partikel berechnet werden. Der Durchmesser eines jeden erkannten Partikels kann absolut oder in einer Projektionsfläche berechnet werden. Der Durchmesser kann als Äquivalenzdurchmesser, Maximaldurchmesser oder Minimaldurchmesser bestimmt werden. Zur Bestimmung der Maximaldurchmesser oder Minimaldurchmesser können Äquivalenzflächen zur erfassten Projektionsfläche der Partikel bestimmt werden. Der Äquivalenzdurchmesser ist insbesondere der Durchmesser, den eine Kreisfläche aufweist, die der Projektionsfläche der erfassten Partikel entspricht.

In einer Ausführungsform wird die Kenngröße berechnet mittels einer Division der bestimmten Partikelanzahl mit einem Durchmesser bis zu einer gewählten Maschenweite durch die bestimmte Gesamtpartikelanzahl. Dafür wird insbesondere durch Bildverarbeitungssoftware für jedes erkannte Partikel der Durchmesser berechnet.

Der Durchmesser kann insbesondere in einer Projektionsfläche erfasst werden.

In einer Ausführungsform wird eine Projektion der Partikelaußenform wenigstens eines Teils der Partikel des Aufgabematerials in einer Bilderfassungsfläche erfasst. Dies kann insbesondere mittels einer Digitalkamera für den Teil der Partikel erfolgen, die im oberen Bereich des Aufgabematerials freiliegen.

Die Kenngröße kann dann mittels einer Division der Summe der Projektionsflächen der Partikel mit einem Durchmesser bis zu einer gewählten Maschenweite durch die Summe der Projektionsflächen aller Partikel erfolgen. Dafür wird insbesondere durch Bildverarbeitungssoftware für jedes erkannte Partikel die Projektionsfläche berechnet.

In einer Ausführungsform wird das Volumen der Partikel erfasst. Dies kann insbesondere mittels einem Volumenscanner, beispielsweise einem Röntgenscanner, erfolgen. In einer anderen Ausführungsform wird das Volumen der Partikel berechnet. Zunächst kann hierfür eine Projektionsfläche einer Kameraaufnahme des Partikels mit einer Kreisfläche angenähert werden. Mittels des Durchmessers der angenäherten Kreisfläche kann dann das Partikelvolumen als Kugel angenähert werden. Alternativ können in der Projektionsfläche einer Kameraaufnahme des Partikels zwei orthogonale Durchmesser bestimmt werden, und das Partikelvolumen als Ellipsoid angenähert werden, der durch die zwei orthogonalen Durchmesser in der Projektionsfläche, und einen dritten dazu orthogonalen Durchmesser bestimmt wird, der dem kleineren oder größeren der zwei Durchmesser in der Projektionsfläche entspricht. In anderen Ausführungsformen kann das Volumen der Partikel durch Kameraaufnahmen aus verschiedenen Winkeln berechnet werden.

Die Kenngröße kann dann mittels einer Division der Summe der Volumina der Partikel mit einem Durchmesser bis zu einer gewählten Maschenweite durch die Summe der Volumina aller Partikel erfolgen. Dafür wird insbesondere durch Bildverarbeitungssoftware für jedes erkannte Partikel die Projektionsfläche berechnet.

Die vorgenannten Kenngrößen sind umso größer je größer der Anteil an kleinen Partikelgrößen ist. Die vorgenannten Kenngrößen sind insbesondere eine dimensionslose Zahl zwischen 0 und 1. Mit abnehmendem Anteil feiner Partikel sinken die vorgenannten Kenngrößen.

Die gewählte Maschenweite ist insbesondere kleiner als 8 mm (Millimeter), kleiner als 6,3 mm, kleiner als 5mm, kleiner als 4 mm, kleiner als 3 mm, kleiner als 2 mm oder kleiner als 1 mm. Die Maschengröße ist insbesondere größer als 0,5 mm.

Die Kenngröße kann insbesondere aus einer Summenverteilungsfunktion bezüglich der Partikelgrößen berechnet werden. Die Kenngröße kann insbesondere in Abhängigkeit einer Quantile bezüglich der Durchmesser der erfassten Partikel berechnet werden. So kann die Kenngröße als der Partikeldurchmesser berechnet werden, den ein festgelegter Unterschreitungsanteil der Partikeldurchmesser unterschreitet.

Die Kenngröße kann aus einer anzahlbezogenen Summenverteilungsfunktion gewonnen werden. Die anzahlbezogene Summenverteilungsfunktion hat als Funktionsargument einen Durchmessergrenzwert, und als Funktionswert den Quotienten der Menge aller erfassten Partikel mit einem Durchmesser kleiner als diesem Durchmessergrenzwert geteilt durch die Gesamtanzahl der erfassten Partikel. Die Kenngröße ist dann der Durchmesserwert, bei dem der Funktionswert der Summenverteilungsfunktion einem festgelegten Unterschreitungsanteil entspricht.

Die Kenngröße kann aus einer flächenbezogenen Summenverteilungsfunktion gewonnen werden. Die flächenbezogene Summenverteilungsfunktion hat als Funktionsargument einen Durchmessergrenzwert, und als Funktionswert den Quotienten der Flächensumme aller erfassten Partikel mit einem Durchmesser kleiner als diesem Durchmessergrenzwert geteilt durch die Flächensumme aller erfassten Partikel. Die Kenngröße ist dann der Durchmesserwert, bei dem der Funktionswert der Summenverteilungsfunktion einem festgelegten Unterschreitungsanteil entspricht.

Die Kenngröße kann aus einer volumenbezogenen Summenverteilungsfunktion gewonnen werden. Die volumenbezogene Summenverteilungsfunktion hat als Funktionsargument einen Durchmessergrenzwert, und als Funktionswert den Quotienten der Volumensumme aller erfassten Partikel mit einem Durchmesser kleiner als diesem Durchmessergrenzwert, geteilt durch die Volumensumme aller erfassten Partikel. Die Kenngröße ist dann der Durchmesserwert, bei dem der Funktionswert der Summenverteilungsfunktion einem festgelegten Unterschreitungsanteil entspricht.

Der Unterschreitungsanteil ist insbesondere 10%, 50% oder 90%.

Die in Abhängigkeit einer Summenverteilungsfunktion bzw. Quantile berechneten Kenngrö-ßen sind umso kleiner je größer der Anteil an kleinen Partikelgrößen ist.

Die Stellgröße wird insbesondere in Abhängigkeit der Kenngröße berechnet.

Die Stellgröße beeinflusst insbesondere die Verfügbarkeit der Mühle. Produktionsunterbrechungen, die auf Grund ansteigender Vibrationen zum Schutz der Mühle initialisiert werden, können im Falle schwankender Aufgabefeinheit über Kenngrößen frühzeitig detektiert und mittels Stellgrößenabänderung vermieden werden.

In einer Ausführungsform erfolgt das Mahlen durch Rotation eines Mahltellers relativ zu Mahlwalzen um eine Mittelachse des Mahltellers, so dass die Mahlwalzen auf einer Mahlbahn des Mahltellers um eine Walzendrehachse abrollen. Es handelt sich bei der Mühle also um eine Wälzmühle. Die flächige Anordnung des Aufgabematerials auf dem Mahlteller, wird durch die Partikelgrößen des Aufgabematerials beeinflusst. So kann sich durch einen zu großen Anteil von kleinen Partikelgrößen insbesondere kein stabiles Mahlbett einstellen. Mit dem resultierenden, stetigen Zusammenbrechen des Mahlbettes gehen zusätzliche Vibrationen einher.

In einer Ausführungsform bewirkt die Änderung der wenigstens einen Stellgröße eine Reduktion der Antriebsdrehzahl der Mühle, insbesondere der Mahltellerdrehzahl. Dies ermöglicht insbesondere die Reduktion von Vibrationen in der Mühle. Die Stellgröße kann also die Sollgeschwindigkeit oder die Antriebsleistung des wenigstens einen Antriebs des Mahltellers sein. Damit wird insbesondere die Drehgeschwindigkeit des Mahltellers in Abhängigkeit der Partikelgrößen gesteuert und zwar in Abhängigkeit vom Anteil an kleinen Partikelgrößen in den erfassten Partikelgrößen. Insbesondere wird die Mahltellerdrehzahl der Mühle mittels der Stellgröße reduziert, wenn der Anteil an kleinen Partikelgrößen in den erfassten Partikelgrößen ansteigt.

In einer Ausführungsform kann die Änderung der wenigstens einen Stellgröße die Reduktion der Anpresskraft von wenigstens einem Wälzkörper der Mühle bewirken. Dies ermöglicht insbesondere die Reduktion von Vibrationen in der Mühle. Bei dem Wälzkörper kann es sich insbesondere um die Mahlwalze der vorgenannten Wälzmühle handeln. Die Anpresskraft ist insbesondere die Kraft mit der die Mahlwalze auf den Mahlteller gedrückt wird, also die Normalkraft zwischen Mahlteller und Mahlwalze. Der Anpressdruck der Mahlwalze auf die Mahlteller kann also in Abhängigkeit von den Partikelgrößen gesteuert werden.

Insbesondere kann die Mahlwalze in einem Schwinghebel gelagert sein. Der Schwinghebel kann um eine Lagerachse verschwenkbar in einer Konsole gelagert sein. Die Anpresskraft der Mahlwalze kann insbesondere über ein Linearstellglied, vorteilhafterweise einen Hydraulikzylinder, gesteuert werden. Das Linearstellglied ist insbesondere am Schwinghebel befestigt. Die Stellgröße kann also die durch das Linearstellglied aufgebrachte Kraft sein, oder insbesondere die Stellung des Ventils, über das dem Hydraulikzylinder Hydraulikfluid zugeführt wird.

In einer Ausführungsform bewirkt die Änderung der wenigstens einen Stellgröße die Reduktion der Aufgaberate, also insbesondere des Stromes des Aufgabematerials, zur Minderung der Mühlenvibration. Insbesondere wird der Volumenstrom oder der Massenstrom reduziert. Die Stellgröße kann insbesondere die Fördergeschwindigkeit eines Aufgabeförderers sein.

In einer Ausführungsform bewirkt die Änderung der wenigstens einen Stellgröße die Erhöhung der in das Aufgabematerial eingetragenen Wassermenge. Auch dies kann die Vibrationen in der Mühle verringern. Insbesondere kann die in einen Mahlraum der Mühle und/oder auf das Aufgabematerial eingetragene Wassermenge erhöht werden. Die eingetragene Wassermenge bewirkt eine Stabilisierung des Mahlbetts, insbesondere durch Bildung von Brückenbindungen im Mahlgut, um der negativen Wirkung des Anteils der kleinen Partikelgrößen entgegenzuwirken.

In einer bevorzugten Ausführungsform des Verfahrens wird eine durch das Mahlen erzeugte Vibration erfasst und der zeitliche Verlauf wenigstens einer Kenngröße hinsichtlich der Vibration, wenigstens einer Kenngröße hinsichtlich der Partikelgrößen und wenigstens eine Kenngröße hinsichtlich der Mahlleistung als Betriebsdatensatz gespeichert. Insbesondere werden diskrete Werte der wenigstens einen Kenngröße bei mindestens 3 Zeitpunkten, bevorzugt mindestens 10 Zeitpunkten, weiter bevorzugt bei mindestens 1000 Zeitpunkten, als Betriebsdatensatz gespeichert. Ausgehend davon erfolgt insbesondere eine Steuerung der Mühle zur Steigerung der Anlagenverfügbarkeit in Abhängigkeit von den Partikelgrößen unter Einhaltung von einem Grenzwert hinsichtlich der Kenngröße der Vibration. Bei der Kenngröße hinsichtlich der Partikelgrößen kann es sich insbesondere um den Anteil an kleinen Partikelgrößen handeln, aber auch um andere Kenngrößen hinsichtlich der Partikelgrößen, wie beispielsweise durchschnittliche Partikelgröße, Varianz der Partikelgröße und/oder maximale Partikelgröße.

Die Mahlleistung ist insbesondere die Masse des von der Mühle produzierten Fertigguts pro Zeit. Alternativ ist die Mahlleistung der Energieverbrauch der Mühle bei weitgehend gleichbleibender Masse von Fertiggut pro Zeit.

Die Erfindung stellt weiterhin eine Anlage zum Mahlen von Aufgabematerial in Form von partikelförmigem Schüttgut bereit, die einen Aufgabeförderer und eine Schüttgutmühle mit einem Vibrationssensor umfasst. Der Vibrationssensor ist ausgelegt, Vibrationen beim Mahlbetrieb der Schüttgutmühle zu erfassen. Weiterhin ist eine Aufgabematerialerfassungsvorrichtung vorgesehen, die ausgelegt ist, wenigstens eine Kenngröße des Aufgabematerials auf dem Aufgabeförderer zu erfassen.

Erfindungsgemäß ist eine Steuerungseinheit vorgesehen, die ausgelegt ist, die Schüttgutmühle in Abhängigkeit von der wenigstens einen erfassten Kenngröße und der erfassten Vibration zu steuern. Bei der Steuerungseinheit handelt es sich insbesondere um eine elektronische Steuerung, vornehmlich in Form eines Mikroprozessors mit den entsprechenden Ein- und Ausgängen. Vorteilhafterweise führt die elektronische Steuerungseinheit das erfindungsgemäße Verfahren über Auslesen der Aufgabematerialerfassungsvorrichtung und Ansteuern von wenigstens einem Aktor der Schüttgutmühle durch Übermittlung der wenigstens einen Stellgröße durch.

Die Steuerungseinheit kann eine Kamerasteuerungseinheit und eine Mühlensteuerungseinheit umfassen, die voneinander beabstandet angeordnet und datenverbunden sind. Alternativ kann sowohl die Steuerung der Kamera, als auch der Mühle in der Steuerungseinheit integriert sein.

Bei der Kenngröße des Aufgabematerials handelt es sich insbesondere um die Partikelgröße des Aufgabematerials, vorteilhafterweise um den Anteil an kleinen Partikelgrößen. Insbesondere erfolgt die Steuerung der Schüttgutmühle durch die vorgenannten Stellgrößen. Die Korrelation der erfassten Kenngröße und der erfassten Vibrationen ermöglicht eine präzise Steuerung der Schüttgutmühle mit hoher Verfügbarkeit und/oder Mahlleistung.

In einer Ausführungsform weist die Steuerungseinheit einen Datenspeicher auf, wobei die Steuerungseinheit konfiguriert ist, in dem Datenspeicher einen Betriebsdatensatz über den zeitlichen Verlauf der wenigstens einen Kenngröße des Aufgabematerials und wenigstens einer Kenngröße bezüglich der erfassten Vibrationen zu speichern, wobei die Steuerungseinheit weiterhin konfiguriert ist, eine Steuerung der Schüttgutmühle anhand des Betriebsdatensatzes vorzunehmen. Insbesondere weist der Betriebsdatensatz diskrete Werte der wenigstens einer Kenngröße bei mindestens 3 Zeitpunkten, bevorzugt bei mindestens 10 Zeitpunkten, weiter bevorzugt bei mindestens 1000 Zeitpunkten auf. Insbesondere wird die Steuerung in Abhängigkeit des zeitlichen Verlaufs von wenigstens einer Stellgröße, vorteilhafterweise von wenigstens zwei Stellgrößen, vorgenommen. Bei den Stellgrößen handelt es sich insbesondere um die Antriebsdrehzahl, insbesondere die Mahltellerdrehzahl der Schüttgutmühle, die Anpresskraft von Wälzkörpern der Schüttgutmühle, oder den Wassereintrag in das Aufgabematerial oder in die Schüttgutmühle.

Die Steuerung kann insbesondere dadurch erfolgen, dass kritische Betriebszustände, also insbesondere Betriebszustände mit erhöhter Vibration, anhand des zeitlichen Verlaufs der wenigstens einen Kenngröße frühzeitig identifiziert werden, und durch Stellgrößenänderungen verbessert oder verhindert werden.

Insbesondere weist die Steuerungseinheit eine Datenverbindungseinrichtung auf, wobei die Steuerungseinheit konfiguriert ist zum Export von Betriebsdatensätzen, umfassend den zeitlichen Verlauf der wenigstens einen Kenngröße des Aufgabematerials und wenigstens einer Kenngröße bezüglich der erfassten Vibration.

Die Kenngröße bezüglich der erfassten Vibration kann insbesondere eine Bereichsangabe sein, in welchem Frequenzbereich Vibrationen eine vorgegebene Intensität überschreiten. Insbesondere kann für diese Berechnung eine Fourier-Transformation bezüglich der erfassten Vibrationen in der Steuerungseinheit durchgeführt werden. Eine andere Kenngröße kann beispielsweise die Angabe der Frequenz sein, bei der die höchste Vibrationsintensität vorliegt. Eine weitere Kenngröße kann beispielsweise die Intensität bzw. Amplitude der maximalen Vibration sein.

In einer Ausführungsform können mehrere Vibrationssensoren an der Schüttgutmühle vorgesehen sein. Die wenigstens eine Kenngröße kann dann eine Mittelung oder gewichtete Mittelung der verschiedenen erfassten Vibrationen erstellen.

In einer Ausführungsform kann die Steuerungseinheit so ausgelegt sein, Parameter des durch die Mühle produzierten Fertigguts, insbesondere Feuchtigkeit und/oder Temperatur und/oder Partikelgrößen, zu erfassen, und bei der Steuerung der Schüttgutmühle zu berücksichtigen. Dafür können ein oder mehrere Feuchtigkeits- und/oder Temperatur- und/oder Partikelgrö-ßensensoren im Bereich eines der Mühle nachgeordneten Sichters, Abscheiders, Förderbands und/oder einer Luftförderrinne vorgesehen sein. Beispielsweise kann die Temperatur über eine Infrarotkamera erfasst werden. Die Feuchtigkeit kann über einen Feuchtigkeitssensor erfasst werden, der nahe dem geförderten Fertiggut angeordnet ist. Der Partikelgrößensensor kann insbesondere der Aufgabematerialerfassungsvorrichtung entsprechen, aber auf das Fertiggut gerichtet sein, und/oder eine Kamera oder ein Lasergranulometer sein. Es kann eine Kenngröße aus einer Summenverteilungsfunktion bezüglich der Partikelgrößen berechnet werden. Die Partikelgröße, die diesbezügliche Kenngröße, die erfasste Temperatur und/oder die erfasste Feuchtigkeit des Fertigguts können bei der Änderung der Stellgröße berücksichtigt werden.

Bei dem partikelförmigen Schüttgut handelt es sich insbesondere um gebrochenes Gesteinsmaterial, beispielsweise um Kalkstein, Gips, Kohle oder Tonstein, mineralisches Schüttgut, beispielsweise Zement oder Zementrohmaterial oder recyceltes Schüttgut, beispielsweise recyceltes Gipsbetonplattenmaterial, Hochofenschlacke, Rauchgasentschwefelungsgips oder Flugasche.

Die Schüttgutmühle ist insbesondere eine Wälzmühle, beispielsweise eine Vertikalrollenmühle oder Walzenschüsselmühle. In anderen Ausführungsformen ist es aber auch denkbar, die Erfindung im Bereich der Kugelmühlen einzusetzen. Die erfindungsgemäßen Verfahren, Anlagen und Verwendungen ermöglichen die Durchsatzrate, Energieeffizienz, Produktfeinheit und/oder Anlagenverfügbarkeit zu verbessern. Dabei kann insbesondere der Einfluss von zeitlichen Schwankungen der Partikelgrößenverteilungen des Aufgabeguts erfasst und berücksichtigt werden. Bei Partikelgrößenschwankungen im Aufgabegut tragen Partikelgrößenextreme, hauptsächlich hohe Feinheitsanteile, zur Steigerung der Mühlenvibration bei und gefährden die Prozessstabilität. Besonders starke Vibrationen können ohne rechtzeitiges Eingreifen in den Prozess zu einer Beschädigung der Mühle führen. Deswegen wird hier vorteilhafterweise eine Schutzabschaltung der Mühle vorgesehen. Dies führt dann aber zu einem Produktionsstopp, der aus wirtschaftlicher Sicht nachteilig ist.

Durch die Erfindung können Ereignisse, die sich aufgrund von Veränderungen der Partikelgrößenverteilung im Aufgabegut negativ auf die Mühlenvibration auswirken, frühzeitig detektiert oder durch eine Steuerungseinheit vorhergesagt werden. Dazu werden in Echtzeit Informationen zu der Partikelgrößenverteilung im Aufgabematerial erfasst. Mithilfe der Informationen insbesondere zu der Aufgabematerialfeinheit, wird die Regelung bzw. Anpassung von Prozessparametern an die jeweilige Aufgabematerialkenngröße zur Vermeidung kritischer Betriebszustände vorgesehen. Vibrationskritischen Betriebszuständen kann insbesondere durch frühzeitige Veränderung von Stellgrößen wie u.a. der Walzenspannkraft, der Menge an eingetragenem Wasser oder der Mahltellerdrehzahl entgegengewirkt werden.

Die Aufgabematerialerfassungsvorrichtung kann insbesondere ein Kamerasystem umfassen, bestehend aus mindestens einer, vorteilhafterweise mindestens vier, und insbesondere bis zu zehn Kameras und mindestens einer, insbesondere mindestens vier, vorteilhafterweise mindestens zehn, und insbesondere bis zu zwanzig Beleuchtungseinheiten. Dazu kommt eine Steuerungseinheit, die separat als Kamerasteuerungseinheit oder integriert in die Mühlensteuerungseinheit vorgesehen sein kann. Das Kamerasystem kann mit einer Druckluftversorgung und wenigstens einer Druckluftdüse versehen sein. Diese bringt Druckluft auf die Linsenoberfläche der wenigstens einen Kamera und/oder der wenigstens einen Beleuchtungseinheit. Dies dient der Staubvermeidung und/oder -beseitigung. Weiterhin kann ein Kameraschutzgehäuse mit einem Deckel vorgesehen sein. Der Deckel kann so ausgelegt sein, dass er, wenn die Druckluftversorgung unterbrochen wird, automatisch schließt. Dafür kann ein pneumatischer Schließmechanismus vorgesehen sein. Dies ermöglicht auch in Betriebspausen oder bei Störungen ein Eindringen von Staub insbesondere auf die Linsenoberfläche zu unterbinden. Um ein Partikel zu erfassen, sollte eine Auflösung von mindestens 5 Pixel pro Partikel vorliegen. Insbesondere wird die wenigstens eine Kamera des Kamerasystems so angeordnet, dass eine Auflösung von wenigstens 5 Pixel pro Millimeter bezüglich des Aufgabematerials vorliegt.

Die wenigstens eine Kamera des Kamerasystems kann insbesondere über dem Aufgabeband positioniert werden und auf das Aufgabematerial gerichtet sein, bevor dieses in die Mühle eintritt. Vorteilhafterweise werden in Abständen von 0,1 bis 5 Sekunden, vorteilhafterweise von 0,2 bis 5 Sekunden, weiter vorteilhafterweise von 0,5 bis 1,5 Sekunden 2D-Bilder durch die wenigstens eine Kamera erfasst. Die erfassten Bilder werden über Bildverarbeitungsalgorithmen in der Steuerungseinheit hinsichtlich der Partikelanzahl und -größe ausgewertet. Insbesondere können dabei Bildverarbeitungsfilter die ggf. bereits nur monochrom erfassten Bilder in Binärbilder umwandeln. Mittels kantenbasierter Algorithmen kann bestimmt werden, wo einzelne Partikel und/oder Partikelansammlungen vorliegen. Die Anzahl der erkannten Partikel wird erfasst. Die Partikelfläche kann über die Anzahl der angeschlossenen Pixel bestimmt werden. Ausgehend von diesen abgeleiteten Kenngrößen hinsichtlich des Aufgabematerials kann wenigstens eine partikelanzahlbezogene, partikelflächenbezogene oder partikelvolumenbezogene Verteilung abgeleitet werden, insbesondere in welchen Partikelgrößenbereich welche Anteile von Partikelanzahl, Partikelfläche oder Partikelvolumen fällt.

Wenn die Kamerasteuerungseinheit separat von der Mühlensteuerungseinheit vorgesehen ist, können diese Steuerungseinheiten über eine Datenverbindung verbunden werden, beispielsweise über Ethernet, Profinet oder ein Funknetzwerk. Darüber werden dann die Rohdaten oder die bereits ausgewerteten Daten von der Kamerasteuerung an die Mühlensteuerung übertragen.

In der Steuerungseinheit, insbesondere in einer separaten Mühlensteuerungseinheit, kann ein Regelungsalgorithmus implementiert sein, insbesondere in Form eines computerimplementierten Verfahrens. Der Regelungsalgorithmus verwendet die Kenngrößen bezüglich des Aufgabematerials und ändert in Abhängigkeit davon die Steuergrößen zur Vermeidung von vibrationskritischen Zuständen.

Im Kamerasystem können Digitalkameras zum Einsatz kommen. Alternativ oder ergänzend können im Kamerasystem Lasertriangulationssysteme zum Einsatz kommen, die 3D-Bildinformationen erzeugen können. Auch daraus kann dann die Größe der einzelnen Partikel ermittelt werden.

Erfindungsgemäß kann unter Verwendung eines Kamerasystems die Partikelgrößenverteilung, insbesondere die Feinheitsveränderung im Aufgabematerial dazu verwendet werden, kritische Betriebszustände einer Walzenschüsselmühle zu vermeiden. Die situative Einflussnahme auf Stellgrößen zur Gewährleistung eines stabilen Mahlprozesses wird unter Berücksichtigung von Veränderungen des Aufgabematerials vorgenommen.

Als kleine Partikelgrößen werden insbesondere Partikel mit einer Größe von kleiner als 5 mm, kleiner als 3 mm, vorteilhafter von kleiner als 1 mm, noch vorteilhafter von kleiner als 200 µm (Mikrometer) angesehen. Insbesondere kann erfindungsgemäß eine Stellgröße geändert werden, wenn der Anteil an kleinen Partikelgrößen 90%, 75%, 50% oder 25% der Gesamtpartikelanzahl übersteigt. Alternativ kann die wenigstens eine Stellgröße geändert werden, wenn der Volumen- oder Massenanteil der Partikel mit kleinen Partikelgrößen 90%, 75%, 50% oder 25% der Gesamtmasse bzw. des Gesamtvolumens des Aufgabematerials übersteigt.

Insbesondere kann bei der Partikelgrößenerfassung mit einer Kamera, ein Korrekturfaktor bezüglich der bilderfassten Partikelgrößen zum Einsatz kommen. So sind die Partikel, die obenauf auf dem Aufgabematerial liegen, oft größer, als die mittlere Partikelgröße. Dies ist anlagenspezifisch und hängt insbesondere von der Schüttung des Aufgabematerials auf den Aufgabeförderer ab. Der Korrekturfaktor ist insbesondere kleiner als 1. Beispielsweise kann ein Korrekturfaktor von 0,75 zum Einsatz kommen. Die erfasste Partikelgröße ergibt sich somit aus einer Multiplikation des Korrekturfaktors mit der bilderfassten Partikelgröße.

In einer Ausführungsform kann der Beladungszustand transversal zur Förderrichtung des Aufgabematerials erfasst werden. Insbesondere wird die Querschnittsfläche des aufgeschütteten Aufgabematerials bestimmt. Dies kann beispielsweise durch einen Linienlaser erfolgen. Ausgehend vom Beladungszustand kann dann die Erfassung der Partikelgrößen präzisiert werden, insbesondere durch den Korrekturfaktor.

Im Folgenden wird die Erfindung anhand von beispielhaften Ausführungsformen weitergehend erläutert, die in den Figuren dargestellt sind. Dabei zeigen
Figur 1 eine schematische seitliche Ansicht einer Ausführungsform einer erfindungsgemäßen Anlage; und
Figur 2 eine Schnittansicht im Bereich der Aufgabematerialerfassungsvorrichtung.

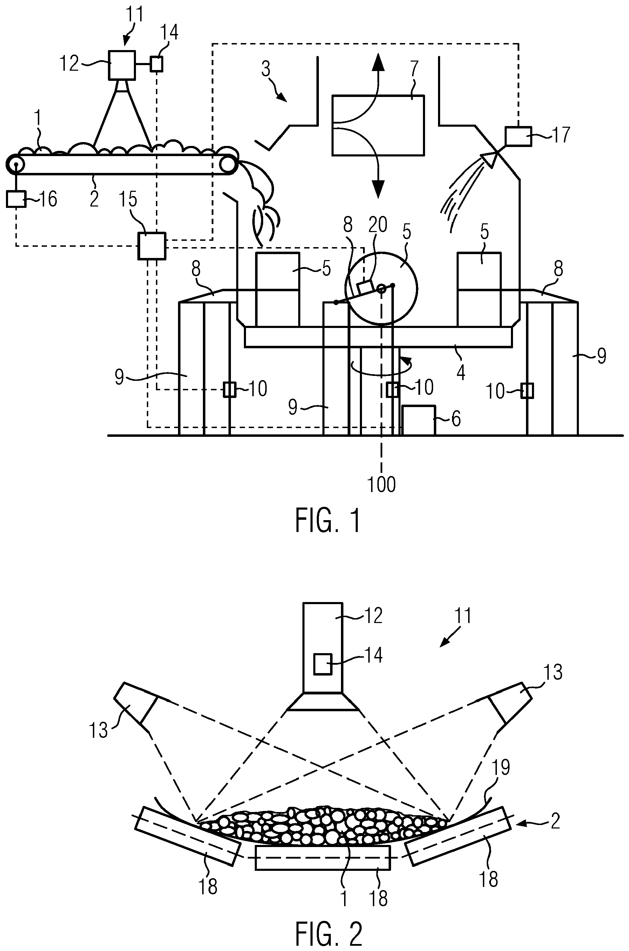

In Fig. 1 ist in schematischer Seitenansicht eine Anlage zum Mahlen von Aufgabematerial in Form von partikelförmigem Schüttgut, insbesondere partikelförmigem Gesteinsmaterial oder Zementrohmaterial, gezeigt. Im Folgenden wird diesbezüglich auch eine Ausführungsform des erfindungsgemäßen Verfahrens erläutert.

Das Aufgabematerial 1 wird auf einem Aufgabeförderer 2 hin zu einer Schüttgutmühle 3 gefördert. Die Schüttgutmühle 3 weist einen Mahlteller 4 und mehrere Mahlwalzen 5 auf, wobei der Mahlteller 4 um eine Mittelachse 100 mittels wenigstens einem Antrieb 6 rotiert wird, so dass die Mahlwalzen 5 auf dem Mahlteller 4 abrollen. Das Aufgabematerial 1 wird in dem Mahlspalt zwischen Mahlwalzen 5 und dem Mahlteller 4 zermahlen. Das gemahlene Aufgabematerial 1 wird mittels einem Luftstrom im äußeren Umfangsbereich des Mahltellers 4 einem Sichter 7 zugeführt, der ausreichend fein gemahlenes Material mit dem Luftstrom aus der Schüttgutmühle 3 hinaus passieren lässt, während zu grobe Partikel zurück auf den Mahlteller 4 geführt und dort erneut übermahlen werden.

Die Mahlwalzen sind jeweils über Schwinghebel 8 in einer Konsole 9 gelagert. Die Anpresskraft der Mahlwalzen auf dem Mahlteller kann durch ein am Schwinghebel 8 angebrachtes Linearstellglied 10 gesteuert werden. Über dem Aufgabeförderer 2 ist eine Aufgabematerialerfassungsvorrichtung 11 vorgesehen. Die Aufgabematerialerfassungsvorrichtung 11 ist im Detail in Fig. 2 dargestellt. Die Aufgabematerialerfassungsvorrichtung 11 umfasst eine Kamera und zwei Beleuchtungsmittel 13. Die Beleuchtungsmittel 13 beleuchten das auf dem Aufgabeförderer 2 vorliegende Aufgabematerial 1 und die Kamera 12 bilderfasst das Aufgabematerial 1.

Die mit der Kamera 12 erfassten Daten werden an eine Kamerasteuerungseinheit 14 übertragen und dort mittels Bildverarbeitungsalgorithmen ausgewertet. Insbesondere wird die Anzahl und Größe von Partikeln im erfassten Bild berechnet. Ausgehend davon wird der Anteil an kleinen Partikelgrößen in den erfassten Partikelgrößen berechnet. Wenn es zu einem Anstieg des Anteils an kleinen Partikelgrößen innerhalb der Gesamtheit der erfassten Partikelgrößen kommt, wird dies einer Mühlensteuerungseinheit 15 gemeldet, die dann wenigstens eine Stellgröße hinsichtlich der Steuerung der Mühle ändert.

Die Aufgabematerialerfassungsvorrichtung 11 ist insbesondere dafür ausgelegt, die oberste Schicht des auf dem Aufgabeförderer 2 aufgeschütteten Aufgabematerials zu erfassen. Aus der Erfassung der obersten Schicht kann dann in der Kamerasteuerungseinheit 14 mittels eines anlagenspezifischen Korrekturfaktors die Partikelgrößenverteilung im gesamten Aufgabematerial abgeschätzt, extrapoliert und/oder berechnet werden.

Die Mühlensteuerung 15 ist insbesondere mit dem Linearstellglied 10 datenverbunden und kann darüber die Anpresskraft der Mahlwalzen 5 auf den Mahlteller 4 steuern. Weiterhin ist die Mühlensteuerungseinheit 15 mit dem Antrieb 6 des Mahltellers 4 datenverbunden und kann darüber die Drehzahl des Mahltellers 4 steuern. Die Mühlensteuerung 15 kann auch mit einem Antrieb 16 des Aufgabeförderers 2 datenverbunden sein und darüber die Menge des pro Zeit der Mühle zugeführten Aufgabematerials 1 steuern. Weiterhin kann die Mühlensteuerungseinheit 15 mit einer Wassereinspritzvorrichtung 17 datenverbunden sein, mit der Wasser in den Mahlraum der Mühle 3 eingespritzt werden kann. Somit kann die Mühlensteuerungseinheit die in den Mahlraum der Mühle eingetragene Wassermenge steuern.

In Fig. 2 ist weiterhin noch die genauere Konstruktion eines möglichen Aufgabeförderers 2 dargestellt, wobei im seitlichen Bereich leicht nach oben angewinkelte Tragrollen 18 vorgesehen sein können, so dass das Förderband 19 des Aufgabeförderers 2 quer zur Förderrichtung konkav geformt wird und somit sicherstellen kann, dass kein Aufgabematerial 1 seitlich vom Aufgabeförderer 2 herabfällt.

Insbesondere kann dem Aufgabeförderer 2 ein Bunker vorgeordnet sein, aus dem Aufgabematerial in gewünschter Menge auf den Aufgabeförderer 2 aufgebracht wird. Der Materialbunker kann mit einer Wägezelle versehen sein, um die Abgabe von Aufgabematerial geregelt vornehmen zu können.

Dem Aufgabeförderer 2 kann eine Weiche vorgeschaltet sein, die ungeeignetes Aufgabematerial nicht auf den Aufgabeförderer fördert, sondern zu einem Bunker. Insbesondere kann dafür ein Magnetdetektor der Weiche vorgeordnet sein, der bestimmt, ob magnetisches Gut im Aufgabematerial enthalten ist. In diesem Fall wird die Weiche so angesteuert, dass das Aufgabematerial nicht auf den Aufgabeförderer 2, sondern in einen Bunker geleitet wird.

Weiterhin kann ein Vibrationssensor 20 vorgesehen sein, der ausgelegt ist, Vibrationen beim Mahlbetrieb der Schüttgutmühle 3 zu erfassen. In einer Ausführungsform kann der Vibrationssensor 20 beispielsweise an dem Schwinghebel 8 angebracht sein. Der Vibrationssensor kann alternativ am Gehäuse der Mühle, am Mahlteller 4, an der Lagerung des Mahltellers 4 oder an der Konsole 9 angebracht sein. Insbesondere können mehrere Vibrationssensoren vorgesehen sein.

Der Vibrationssensor 20 ist mit der Mühlensteuerungseinheit 15 datenverbunden. Die Mühlensteuerungseinheit 15 ist ausgelegt, die Schüttgutmühle in Abhängigkeit von den Daten der Kamerasteuerungseinheit 14 und vom Vibrationssensor 20 zu steuern.

## Patentansprüche

1. Verfahren zum Mahlen von Aufgabematerial (1) in Form von partikelförmigem Schüttgut, mit den Schritten:
Erfassen von Partikelgrößen des Aufgabematerials (1),
Mahlen des Aufgabematerials (1) in einer Mühle (3) in Abhängigkeit von wenigstens einer Stellgröße, und
Änderung der wenigstens einen Stellgröße, wenn der Anteil an kleinen Partikelgrößen in den erfassten Partikelgrößen ansteigt.

2. Verfahren nach Anspruch 1, wobei eine Kenngröße berechnet wird, die indikativ für den Anteil an kleinen Partikelgrößen ist, und wobei die Stellgröße in Abhängigkeit dieser Kenngröße geändert wird.

3. Verfahren nach Anspruch 2, wobei die Kenngröße durch eine Division der bestimmten Partikelanzahl durch die mit einer Aufgabematerialerfassungsvorrichtung maximal detektierbare Partikelanzahl berechnet wird.

4. Verfahren nach Anspruch 2, wobei die Kenngröße in Abhängigkeit der Durchmesser für jedes erkannte Partikel berechnet wird, wobei der Durchmesser eines jeden erkannten Partikels in einer Projektionsfläche berechnet wird, und wobei die Kenngröße mittels einer Division der Summe der Projektionsflächen der Partikel mit einem Durchmesser bis zu einer gewählten Maschenweite durch die Summe der Projektionsflächen aller Partikel berechnet wird.

5. Verfahren nach Anspruch 2, wobei die Kenngröße aus einer Summenverteilungsfunktion bezüglich der Partikelgrößen berechnet wird.

6. Verfahren nach Anspruch 5, wobei die Summenverteilungsfunktion volumenbezogen ist, und wobei die volumenbezogene Summenverteilungsfunktion als Funktionsargument einen Durchmessergrenzwert, und als Funktionswert den Quotienten der Volumensumme aller erfassten Partikel mit einem Durchmesser kleiner als diesem Durchmessergrenzwert geteilt durch die Volumensumme aller erfassten Partikel hat, wobei die Kenngröße der Durchmesserwert ist, bei dem der Funktionswert der Summenverteilungsfunktion einem festgelegten Unterschreitungsanteil entspricht.

7. Verfahren nach einem der vorangehenden Ansprüche, wobei das Mahlen durch Rotation eines Mahltellers (4) relativ zu Mahlwalzen (5) um eine Mittelachse (100) des Mahltellers (4) erfolgt, sodass die Mahlwalzen (5) auf einer Mahlbahn des Mahltellers (4) um eine Walzendrehachse abrollen.

8. Verfahren nach einem der vorangehenden Ansprüche, wobei die Änderung der wenigstens einen Stellgröße eine Reduktion der Antriebsdrehzahl der Mühle (3), insbesondere der Drehzahl eines Mahltellers (4), bewirkt.

9. Verfahren nach einem der vorangehenden Ansprüche, wobei die Änderung der wenigstens einen Stellgröße die Reduktion der Anpresskraft von wenigstens einem Wälzkörper (5) der Mühle (3) bewirkt.

10. Verfahren nach einem der vorangehenden Ansprüche, wobei die Änderung der wenigstens einen Stellgröße die Reduktion des Massenstromes des Aufgabematerials (1) bewirkt.

11. Verfahren nach einem der vorangehenden Ansprüche, wobei die Änderung der wenigstens einen Stellgröße die Erhöhung der in einen Mahlraum der Mühle (3) eingetragenen Wassermenge bewirkt.

12. Verfahren nach einem der vorangehenden Ansprüche, wobei eine durch das Mahlen erzeugte Vibration erfasst wird, wobei der zeitliche Verlauf wenigstens einer Kenngröße hinsichtlich der Vibration, wenigstens einer Kenngröße hinsichtlich der Partikelgrößen, und wenigstens einer Kenngröße hinsichtlich der Mahlleistung als Betriebsdatensatz gespeichert werden.

13. Anlage zum Mahlen von Aufgabematerial (1) in Form von partikelförmigem Schüttgut, umfassend
einen Aufgabeförderer (2),
eine Schüttgutmühle (3) mit einem Vibrationssensor (20), der ausgelegt ist, Vibrationen beim Mahlbetrieb zu erfassen,
eine Aufgabematerialerfassungsvorrichtung (11), die ausgelegt ist, wenigstens eine Kenngröße des Aufgabematerials (1) auf dem Aufgabeförderer (2) zu erfassen,
**gekennzeichnet durch**
eine Steuerungseinheit (15), die ausgelegt ist, die Schüttgutmühle (3) in Abhängigkeit der wenigstens einen erfassten Kenngröße und der erfassten Vibrationen zu steuern.

14. Anlage nach Anspruch 13, wobei es sich bei der Kenngröße des Aufgabematerials (1) um die Partikelgröße des Aufgabematerials handelt.

15. Anlage nach Anspruch 13 oder 14, wobei es sich bei der Kenngröße des Aufgabematerials (1) um den Anteil an kleinen Partikelgrößen handelt.

16. Anlage nach einem der Ansprüche 13 bis 15, wobei die Steuerungseinheit (15) einen Datenspeicher aufweist, wobei die Steuerungseinheit (15) konfiguriert ist, in dem Datenspeicher einen Betriebsdatensatz über den zeitlichen Verlauf der wenigstens einen Kenngröße des Aufgabematerials (1) und wenigstens einer Kenngröße bezüglich der erfassten Vibrationen zu speichern, wobei die Steuerungseinheit (15) weiterhin konfiguriert ist, eine Steuerung der Schüttgutmühle (3) anhand des Betriebsdatensatzes vorzunehmen.

17. Anlage nach einem der Ansprüche 13 bis 16, wobei die Steuerungseinheit (15) eine Datenverbindungseinrichtung aufweist, und konfiguriert ist zum Export von Betriebsdatensätzen, umfassend den zeitlichen Verlauf von der wenigstens einen Kenngröße des Aufgabematerials (1) und wenigstens einer Kenngröße bezüglich der erfassten Vibrationen.

18. Anlage nach einem der Ansprüche 13 bis 16, wobei die Steuerungseinheit (15) ausgelegt ist, wenigstens einen Parameter des durch die Schüttgutmühle (3) produzierten Fertigguts, insbesondere Temperatur und/oder Partikelgrößen, zu erfassen, und bei der Steuerung der Schüttgutmühle (3) zu berücksichtigen.

## Claims

1. Method for grinding feed material (1) in the form of particulate bulk material, with the steps of:
detecting particle sizes of the feed material (1),
grinding the feed material (1) in a mill (3) on the basis of at least one manipulated variable, and
modifying the at least one manipulated variable if the proportion of small particle sizes in the detected particle sizes increases.

2. Method according to claim 1, wherein a parameter is calculated which is indicative of the proportion of small particle sizes, and wherein the manipulated variable is modified on the basis of this parameter.

3. Method according to claim 2, wherein the parameter is calculated by dividing the determined particle number by the maximum number of particles detectable by a feed material detection device.

4. Method according to claim 2, wherein the parameter is calculated on the basis of the diameters for each detected particle, wherein the diameter of each detected particle is calculated in a projected area, and wherein the parameter is calculated by means of a division of the sum of the projected areas of the particles with a diameter of up to a selected mesh size by the sum of the projected areas of all particles.

5. Method according to claim 2, wherein the parameter is calculated from a cumulative distribution function with respect to the particle sizes.

6. Method according to claim 5, wherein the cumulative distribution function is volume-based, and wherein the volume-based cumulative distribution function has as a function argument a diameter limit value, and as a function value the quotient of the volume sum of all detected particles having a diameter smaller than this diameter limit value divided by the sum of the volumes of all detected particles, wherein the parameter is the diameter value where the function value of the cumulative distribution function corresponds to a fixed shortfall proportion.

7. Method according to one of the preceding claims, wherein the grinding is performed by rotation of a grinding plate (4) relative to grinding rollers (5) about a central axis (100) of the grinding plate (4), so that the grinding rollers (5) roll on a grinding path of the grinding plate (4) about a roller rotation axis.

8. Method according to one of the preceding claims, wherein the modification of the at least one manipulated variable causes a reduction of the drive rotational speed of the mill (3), in particular the rotational speed of a grinding plate (4).

9. Method according to one of the preceding claims, wherein the change of the at least one manipulated variable causes the reduction of the contact force of at least one rolling element (5) of the mill (3).

10. Method according to one of the preceding claims, wherein the modification of the at least one manipulated variable causes the reduction of the mass flow of the feed material (1).

11. Method according to one of the preceding claims, wherein the change of the at least one manipulated variable causes the increase of the amount of water introduced into a grinding space of the mill (3).

12. Method according to one of the preceding claims, wherein a vibration generated by the grinding is detected, wherein the time history of at least one parameter in view of the vibration, at least one parameter in view of the particle sizes, and at least one parameter in view of the grinding power are stored as operational data set.

13. System for grinding feed material (1) in the form of particulate bulk material, comprising a feed conveyor (2),
a bulk material mill (3) with a vibration sensor (20) adapted to detect vibrations during the grinding operation,
a feed material detection device (11) adapted to detect at least one parameter of the feed material (1) on the feed conveyor (2),
**characterized by**
a control unit (15) adapted to control the bulk material mill (3) on the basis of the at least one detected parameter and the detected vibrations.

14. System according to claim 13, wherein the parameter of the feed material (1) is the particle size of the feed material.

15. System according to claim 13 or 14, wherein the parameter of the feed material (1) is the proportion of small particle sizes.

16. System according to one of claims 13 to 15, wherein the control unit (15) includes a data storage, wherein the control unit (15) is configured to store in the data storage an operational data set on the time history of the at least one parameter of the feed material (1) and at least one parameter with respect to the detected vibrations, wherein the control unit (15) is further configured to control the bulk material mill (3) based on the operational data set.

17. System according to one of claims 13 to 16, wherein the control unit (15) includes a data connection means and is configured for the export of operational data sets, comprising the time history of the at least one parameter of the feed material (1) and at least one parameter with respect to the detected vibrations.

18. System according to one of claims 13 to 16, wherein the control unit (15) is adapted to detect at least one parameter of the final product produced by the bulk material mill (3), in particular the temperature and/or particle sizes, and to consider them in the control of the bulk material mill (3).

## Revendications

1. Procédé de broyage de matériau d'alimentation (1) sous forme de matière particulaire en vrac, comprenant les étapes consistant à :
détecter les tailles de particules du matériau d'alimentation (1),
broyer le matériau d'alimentation (1) dans un broyeur (3) en fonction d'au moins une grandeur de réglage, et
modifier la au moins une grandeur de réglage lorsque la proportion de petites tailles de particules augmente au sein des tailles de particules détectées.

2. Procédé selon la revendication 1, dans lequel une grandeur caractéristique indicative de la proportion de petites tailles de particules est calculée, et dans lequel la grandeur de réglage est modifiée en fonction de ladite grandeur caractéristique.

3. Procédé selon la revendication 2, dans lequel la grandeur caractéristique est calculée en divisant le nombre déterminé de particules par le nombre maximal de particules détectables par un dispositif de détection de matériau d'alimentation.

4. Procédé selon la revendication 2, dans lequel la grandeur caractéristique est calculée en fonction des diamètres pour chaque particule détectée, dans lequel le diamètre d'une particule respective détectée est calculé au sein d'une surface de projection, et dans lequel la grandeur caractéristique est calculée en divisant la somme des surfaces de projection des particules d'un diamètre allant jusqu'à un calibre sélectionné par la somme des surfaces de projection de toutes les particules.

5. Procédé selon la revendication 2, dans lequel la grandeur caractéristique est calculée à partir d'une fonction de répartition de somme se rapportant aux tailles de particules.

6. Procédé selon la revendication 5, dans lequel la fonction de répartition de somme se rapporte au volume, et dans lequel la fonction de répartition de somme se rapportant au volume présente, comme argument de fonction, une valeur limite de diamètre et, comme valeur de fonction, le quotient de la somme des volumes de toutes les particules détectées présentant un diamètre inférieur à ladite valeur limite de diamètre, divisée par la somme des volumes de toutes les particules détectées, dans lequel la grandeur caractéristique est la valeur de diamètre pour laquelle la valeur de fonction de la fonction de répartition de somme correspond à une proportion déterminée de sous-dépassement.

7. Procédé selon l'une quelconque des revendications précédentes, dans lequel le broyage intervient par rotation d'un plateau de broyage (4) par rapport à des rouleaux de broyage (5) autour d'un axe central (100) du plateau de broyage (4), de sorte que les rouleaux de broyage (5) roulent autour d'un axe de rotation de rouleau sur un trajet de broyage du plateau de broyage (4).

8. Procédé selon l'une quelconque des revendications précédentes, dans lequel la modification de la au moins une grandeur de réglage entraîne une réduction de la vitesse de rotation d'entraînement du broyeur (3), en particulier de la vitesse de rotation d'un plateau de broyage (4).

9. Procédé selon l'une quelconque des revendications précédentes, dans lequel la modification de la au moins une grandeur de réglage provoque la réduction de la force de pression d'au moins un organe de roulement (5) du broyeur (3).

10. Procédé selon l'une quelconque des revendications précédentes, dans lequel la modification de la au moins une grandeur de réglage provoque une réduction du débit massique du matériau d'alimentation (1).

11. Procédé selon l'une quelconque des revendications précédentes, dans lequel la modification de la au moins une grandeur de réglage provoque l'augmentation de la quantité d'eau introduite dans un espace de broyage du broyeur (3).

12. Procédé selon l'une quelconque des revendications précédentes, dans lequel une vibration produite par le broyage est détectée, dans lequel l'évolution temporelle d'au moins une grandeur caractéristique concernant la vibration, l'évolution temporelle d'au moins une grandeur caractéristique concernant les tailles de particules, et l'évolution temporelle d'au moins une grandeur caractéristique concernant la puissance de broyage sont mémorisées en tant que jeu de données de fonctionnement.

13. Installation pour le broyage de matériau d'alimentation (1) sous forme de matière particulaire en vrac, comprenant
un convoyeur d'alimentation (2),
un broyeur de produit en vrac (3) muni d'un capteur de vibrations (20) conçu pour détecter les vibrations pendant le broyage,
un dispositif de détection de matériau d'alimentation (11) conçu pour détecter au moins une grandeur caractéristique du matériau d'alimentation (1) sur le convoyeur d'alimentation (2),
**caractérisé par**
une unité de commande (15) conçue pour commander le broyeur de produit en vrac (3) en fonction de la au moins une grandeur caractéristique détectée et des vibrations détectées.

14. Installation selon la revendication 13, dans laquelle la grandeur caractéristique du matériau d'alimentation (1) est la taille de particules du matériau d'alimentation.

15. Installation selon la revendication 13 ou 14, dans laquelle la grandeur caractéristique du matériau d'alimentation (1) est la proportion de petites tailles de particules.

16. Installation selon l'une quelconque des revendications 13 à 15, dans laquelle l'unité de commande (15) présente une mémoire de données, dans laquelle l'unité de commande (15) est configurée pour stocker dans la mémoire de données un jeu de données de fonctionnement sur l'évolution temporelle de la au moins une grandeur caractéristique du matériau d'alimentation (1) et au moins une grandeur caractéristique concernant les vibrations détectées, dans lequel l'unité de commande (15) est en outre configurée pour mettre en oeuvre une commande du broyeur de produit en vrac (3) à l'aide du jeu de données de fonctionnement.

17. Installation selon l'une quelconque des revendications 13 à 16, dans laquelle l'unité de commande (15) présente un dispositif de liaison de données et est configurée pour exporter des jeux de données de fonctionnement comprenant l'évolution temporelle de la au moins une grandeur caractéristique du matériau d'alimentation (1) et d'au moins une grandeur caractéristique concernant les vibrations détectées.

18. Installation selon l'une quelconque des revendications 13 à 16, dans laquelle l'unité de commande (15) est conçue pour détecter au moins un paramètre du produit fini produit grâce au broyeur de produit en vrac (3), en particulier une température et/ou des taille de particules, et pour en tenir compte lors de la commande du broyeur de produit en vrac (3).
